# EUROPEAN PATENT SPECIFICATION

(11) **EP 2 867 186 B1**
(45) Date of publication and mention of the grant of the patent: **21.09.2016**
(21) Application number: 13765452.1
(22) Date of filing: 27.06.2013
(51) Int. Cl.: C04B 41/86, C09C 3/04, B41M 5/00, C03C 8/14, C09D 11/00

(54) **CERAMIC MATERIAL FOR DECORATION AND PROCESS FOR ITS PREPARATION**
KERAMISCHES MATERIAL ZUR DEKORATION UND SEIN HERSTELLUNGSVERFAHREN
MATERIAU CERAMIQUE POUR DECORATION ET SON PROCEDE DE PREPARATION

(30) Priority: 02.07.2012 IT MI20121163
(43) Date of publication of application: 06.05.2015
(73) Proprietor: System S.P.A., 41100 Modena (IT)
(72) Inventor: STEFANI, Franco, I-41049 Sassuolo (Modena) (IT); CAMORANI, Carlo Antonio, I-42014 Castellarano (Reggio Emilia) (IT)
(74) Representative: Biggi, Cristina
(86) International application number: PCT/IB2013/055285
(87) International publication number: WO 2014/006548

(56) References cited:
- EP-A1- 1 182 234
- EP-A2- 1 190 993
- EP-A2- 2 014 629
- WO-A1-2012/076438

## Description

The present invention relates to a granular material for digital control decoration, the use thereof as a decorative material, and a process for the preparation thereof.

### Background Art

There are known decoration systems, so-called dry digital control systems, in which it is envisaged to preform, on a ribbon or transfer surface, an image consisting of liquid ejected from inkjet apparatus, make a decorating material in the form of a powder or granules adhere to this image (hence the name "dry" decoration) and then transfer the decoration thus obtained onto the receiving surface of the object to be decorated.

Compared to traditional inkjet technologies, these systems have the advantage of eliminating every risk of possible clogging and wear on delicate inkjet apparatus since the decorating material does not pass through the inkjet apparatus, which limits itself to working with simple liquids devoid of solid suspensions.

Examples of such systems are described in IT1314624, WO2005025828 and WO2007096746, wherein the liquid envisaged is water, which is particularly convenient given its physicochemical and ecological characteristics.

The commercially available decorating materials for this and other so-called "dry" technologies must exhibit good flowability and a minimal dispersal of fine powders into the environment and they are thus produced in the form of granules using different methods.

A first type of material is obtained with a technology which provides for wet grinding of the raw materials and subsequent atomization in order to obtain pseudo-spherical granules. However, due to the fact that they necessarily also contain plastic materials (clay, kaolin etc.) and other additives (binders, thinners, suspending agents etc.), in contact with the inkjet water these granules tend to disintegrate on the surface, thus remaining permanently glued to the transfer surface.

A second type of granular material is obtained using a method which comprises the following steps:
- wet grinding the raw materials as in the previous case;
- drying and baking the suspension thus obtained inside containers made of refractory material so as to obtain (through softening by melting) a compact semi-finished material;
- crushing the semi-finished material and classifying it to obtain the desired particle size.

An example of a material of said second type can be found on EP2014629.

A third type of granular material known in the art is obtained by means of a method which comprises the following steps:
- melting a vitreous composition inside a melting oven;
- cooling the molten mass rapidly with water when it leaves the melting oven;
- crushing and classification.

When the aforesaid materials of the second and third type are used, difficulties occur during detachment from the transfer surface, since as the granules are not very absorbent, water tends to remain in the interface between the granule and the transfer surface, thus impeding detachment. Moreover, as these granules are of a sharp and abrasive nature, wear or breakage can occur on the transfer surface. Finally, this production technology is decidedly laborious and costly.

A fourth type of granular material known in the art for use as a decorating material is composed of glass microspheres. These do not present problems of abrasiveness but are difficult to detach from the transfer surface due to their lack of absorbency.

Therefore, one object of the present invention is to resolve the above-described problems, providing a granular decorating material that does not undergo disintegration upon contact with water and can be easily and conveniently used in digital control decoration techniques, in particular in the "dry" water-based inkjet decoration technology.

### Summary of the invention

In a first aspect, the present invention relates to a process for the preparation of a granular material for the digital control decoration, preferably by using water-based inkjet decorating machines, said process comprising the steps of:
a) grinding a solid composition comprising ceramic raw materials, preferably in the presence of water;
b) granulating the ground composition of step a) in the form of agglomerates having sizes comprised from 0.02 mm to 2 mm; and;
c) calcinating said agglomerates at a temperature of at least 500°C.

In a second aspect, the invention relates to a granular material for digital control decoration, preferably using water-based inkjet decorating machines, obtained (or obtainable) with the above-described process.

In a further aspect, the invention relates to the use of said granular material as a decorative material, preferably for ceramic tiles.

Therefore, in a further aspect, the invention relates to a surface decorated with the present material, preferably a ceramic surface.

### Description of the figures

Figure 1: schematic cross section of a granule of the decorating material of the invention after step b) of granulating by atomization.
Figure 2: schematic cross section of a granule of decorating material according to the invention, in the final phase of the calcinating process c).
Figure 3: schematic cross section of a granule of the decorating material of the invention during a digital control decoration operation.

### Detailed description

As mentioned above, the present invention relates to a process enabling a granular material to be obtained for use in digital control decoration, and which comprises the steps of grinding and granulating a solid composition comprising ceramic raw materials, which is characterized by a subsequent step of calcination at a temperature of at least 500° C.

In particular, in the grinding step a) of the present process, a solid composition comprising ceramic raw materials, optionally in a mixture with at least another additive component as described below, is subjected to grinding, typically using techniques known in the art, such as, for example, wet or dry grinding. In particular, the grinding has the purpose of reducing the size of the granules of the various components and homogenizing the distribution thereof. Preferably, at the end of the grinding step, the composition will have a particle size of less than 0.04 mm, more preferably less than 0.02 mm.

In a preferred embodiment, the solid composition comprising ceramic raw materials undergoes wet grinding, in the presence of a suitable dispersing agent, such as water, preferably using an intermittent drum mill.

Said solid composition comprising ceramic raw materials can be prepared on the spot or also prepared in a preceding step, by means of known techniques, and used at the time of need.

"Ceramic raw materials" means a material known to the person skilled in the art, generally made up of inorganic compounds such as, for example, kaolin, clay, bentonite, titanium dioxide, rutile sand, sodium feldspar, potassium feldspar, nepheline, pegmatite, fluorite, spodumene, talc, quartz, wollastonite, silica, alumina, zirconium silicate, magnesium, titanium, zinc, cobalt, iron, chromium, copper, manganese, selenium, cadmium, cerium, tin, lead and zirconium oxide etc., barium, calcium, lithium and strontium carbonate etc., semi-finished materials such as frits, colouring pigments, enamels etc. Said ceramic raw materials are available on the market and can be purchased for example from: Bal-co S.p.a, Sassuolo (MO); Colorobbia Italia Spa, Sovigliana Vinci (FI); Smalticeram Unicer S.p.a, Roteglia of Castellarano (RE); and Inco Industria colori S.r.l. Montebonello PAVULLO (MO).

In an additional embodiment, the solid composition of step a) comprises the ceramic material described above, in a mixture with at least one additional organic and/or inorganic component capable of being decomposed and released in the form of a gas, at high temperatures, i.e. at temperatures higher than at least 300°C, preferably higher than at least 500°C. For this purpose, the preferred additive components are selected from the group consisting of: cereal husks, preferably rice husks, starches, coal, alkaline or alkaline-earth sulphates or carbonates and cereal flours, the latter being particularly preferred. It has been observed, in fact, that thanks to the presence of at least said additives, it is possible to increase the porosity of the granular material obtainable with the present process and thus obtain an easier detachment of the decorating material from the transfer surface.

Optionally, the solid composition comprising ceramic material can contain further additives known in the art such as, for example, binding agents, surfactants, suspending agents, thinners, deflocculants and the like, usable both individually and in a mixture.

When present, the additive is used in amounts comprised from 1% to 20% by weight, relative to the quantity of ceramic raw materials used, preferably in amounts comprised from 5 to 15%, even more preferably from 5 to 10%.

Therefore, in a preferred embodiment, the initial composition comprises ceramic raw materials in a mixture with at least one cereal flour in a percentage by weight comprised from 5 to 7%.

In an equally preferred embodiment, the initial composition comprises ceramic raw materials in a mixture with at least one deflocculant additive in order to render the aqueous suspension more fluid during the wet grinding step, thus permitting the amount of water used for the dispersion to be reduced. In this regard, examples of deflocculant additives that can be used are polyphosphate salts or alkaline or alkaline-earth silicates, preferably selected from the group consisting of: sodium tripolyphosphate and sodium silicate. Preferably, said deflocculant agent is present in a percentage by weight comprised from 0.2 to 2%, relative to the total weight of the starting ceramic material.

The grinding step a) generally takes place at room temperature (i.e. comprised from 15 to 40° C), for a time that varies in general according to the amount of material used and the type of system used for grinding.

At the end of step a), the ground composition is subjected to the granulating step b) to form agglomerates having sizes comprised from 0.02 mm to 2 mm, preferably comprised from 0.04 to 0.15 mm.

The term "agglomerate" indicates a granule made up of small aggregates of particles of ground ceramic raw materials.

In a preferred embodiment of the invention, step b) occurs by atomization; still more preferably it is carried out using a cylindrical tower atomizer with the lower conical part converging downward.

Generally, the operating temperature during step b) is comprised from 400° C to 900° C, depending, for example, on the atomizer type and efficiency, and on the type of ceramic material to be atomized.

In a preferred embodiment, the granulating step b) occurs in the presence of at least one aggregating agent, such as, for example, cellulose derivatives or alkaline silicates, preferably selected from the group consisting of: carboxymethyl cellulose (CMC) and sodium silicate.

At the end of granulation, the agglomerates are subjected to the subsequent calcinating step c), whereby the granular material for digital control decoration according to the invention is obtained. In particular, the calcinating step occurs at a temperature of at least 500°C, i.e. such as to render said aggregates stable and not disintegratable in water, and able to maintain a degree of porosity, expressed as free volume between the particles, preferably of at least 10%, more preferably of at least 30%, and even more preferably comprised from 30% to 50% of the total volume. Therefore, the preferred calcinating temperatures are higher than 600° C, even more preferably higher than 1000° C.

Advantageously, the calcinating step c) enables the water naturally present in the ceramic raw materials used in the present process to be eliminated and, moreover, enables the combustion of the organic materials and of the compounds deriving, for example, from any additive components present in the initial solid composition, as described above, such as carbonates, sulphates and the like. Such elimination, in fact, contributes to increase the porosity of the final material, since it serves to increase the free volume, which means the space present between the various particles making up the final material.

The size of the granules making up the material of the invention is preferably comprised from 0.02 mm to 2 mm, preferably comprised from 0.04 and 0.15 mm, even more preferably comprised from 0.04 to 0.10 mm. The porosity of the material of the invention, expressed as the free volume between the particles, is at least 10%, more preferably at least 30%, and even more preferably comprised from 30 to 50% of the total volume. Higher values of free volume advantageously lead to better characteristics of the final product in terms of better water absorption and thus make it possible to obtain an easier detachment of the decorating material from the transfer surface.

Step c) of the present process for preparing a granular material for decorative use generally occurs for a time such as to ensure a sufficient linkage in the points of contact between the various particles, while maintaining the porosity at values as described above. In one embodiment, the calcinating takes place for a time of at least 1 minute, preferably for a time comprised from 10 to 30 minutes.

Optionally, and in accordance with a preferred embodiment of the invention, the calcinating step c) can be preceded by a sieving step in order to select agglomerates having specific sizes.

Advantageously, the process of the present invention makes it possible to obtain an "inert" material, i.e. a material capable of not remaining stacked to the transfer surface of the decorating machine in the presence of water. Moreover, the present process makes it possible to realize a non-abrasive, economical, fine granular material with good flowability and composed of granules which have a high porosity and a controllable value, and can be easily and conveniently used in digital control decoration techniques, in particular in "dry" water-based inkjet decoration technology.

Therefore, in a further aspect, the present invention relates to a granular material for digital control decoration, preferably using water-based inkjet decorating machines, obtained (or obtainable) with the process of the present invention as described above.

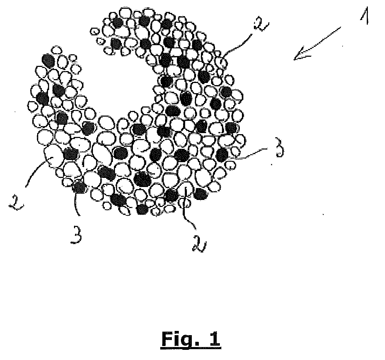

The invention can be represented in a preferred embodiment by the figures appended hereto. In particular, figure 1 illustrates a granule (1) obtained after step b) of granulating by atomization and comprising a series of particles (2) of the ceramic material used in admixture with other particles of an additive component (3), such as, for example, cereal flour in an amount of about 5% by weight.

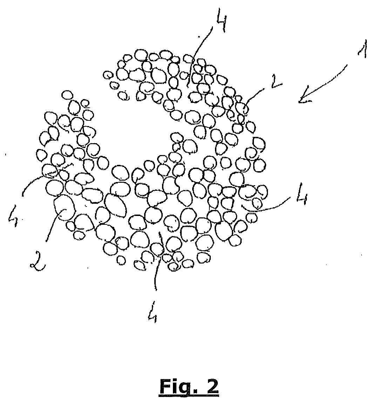

These granules were originated by mixing together the various elements (2) and (3) in the presence of water as a dispersing agent and subjecting the suspension thus obtained to the grinding step a) and subsequent granulating by atomization. The final calcination at a temperature of about 1000° C caused the combustion of the particles of the additive component (3), leaving cavities (4) in the granule (1) as indicated in figure 2.

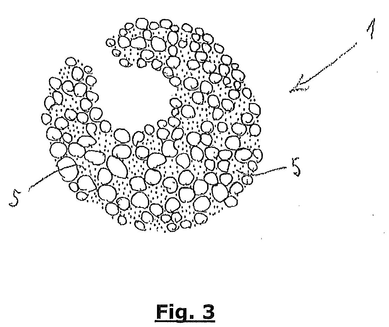

The granular material of the present invention is particular suitable for digital control decoration, preferably by water-based inkjet decorating machines. In fact, as illustrated for example in figure 3, when a granule (1) of the present material is placed in contact with water (5) present in the transfer ribbon of the decorating machine, the water (5) is immediately absorbed by the granule (1), typically due to capillarity, so that the granule is capable of being easily detached from the ribbon itself, substantially without undergoing any disintegration and without leaving residues on the surface of the ribbon itself.

Advantageously, the present material has characteristics of solidity, resistance to the digital decoration process and ease of preparation such that the use thereof is convenient from both a cost and environmental point o view.

Therefore, a further aspect of the invention is the use of the granular material obtained according to the present process, as a decorative material, preferably for digital control decoration techniques.

In a further aspect, the invention relates to a solid surface decorated with the granular material obtained according to the process of the present invention, wherein said surface is preferably a ceramic surface, even more preferably in the form of a tile.

The present invention will now be illustrated in the experimental part below, without it being intended to limit the scope hereof in any way.

### Experimental part

### Example 1: process for the preparation of the ceramic granular material of the invention.

**Table 1: Starting solid composition comprising the following ceramic raw materials:**

| **Ceramic raw material** | **Weight (kg)** |
|---|---|
| Frit MO5 (Micron) | 51.7 |
| Kaolin Cam 40 (Bal-co) | 4.9 |
| V56 (Micron) | 9.7 |
| Zircobit MO5 (Colorobbia) | 2 |
| Talc 320 (Balco) | 6.8 |
| Alr 44 (Bal-co) | 2 |
| FsNaW30 (Bal-co) | 20 |
| Pigment IC 18/999 (Inco) | 2.9 |
| Sodium silicate | 1.8 |

Water (26 Kg) is added to the starting solid composition of Table 1 and the suspension thus obtained is subjected to wet grinding in a drum mill with sintered alumina balls until a size of less than 0.02 mm is obtained for the particles.

Subsequently, it is subjected to the atomization step with 0.9 mm diameter air nebulizer nozzles by the company PNR Italia S.r.l. at a liquid suspension pressure of 1 bar and a nebulization air pressure of 2.5 bar at a temperature of about 850° C. Sieving is thereafter performed to eliminate the fraction with a particle size greater than 0.18 mm and then the final calcination step is carried out in an intermittent muffle furnace for a period of 15 minutes at 900° C, with the granulated material arranged in 12-mm-high layers, so to obtain a final material with a particle size distribution of 90% by weight comprised in the interval of 0.03 mm to 0.15 mm.

The volumetric porosity of the granules is 42%.

In the decoration test, the granulated material detached from the transfer ribbon without leaving significant residues.

## Claims

1. A process for the preparation of a granular material for digital control decoration, comprising the following steps:
a) grinding a solid composition comprising ceramic raw materials, preferably in the presence of water;
b) granulating the ground composition of step a) in the form of agglomerates having sizes comprised from 0.02 mm to 2 mm; and
c) calcinating said agglomerates at a temperature of at least 500° C.

2. The process according to claim 1, wherein said solid composition also comprises at least one additive selected from the group consisting of: cereal husks, preferably rice husks, starches, coal, alkaline or alkaline-earth sulphates or carbonates, cereal flours, binders, surfactants, suspending agents, thinners and deflocculant agents, and mixtures thereof.

3. The process according to claim 2, wherein said deflocculants are selected from the group consisting of: a polyphosphate salt and an alkaline or alkaline-earth silicate, preferably sodium tripolyphosphate and sodium silicate.

4. The process according to claim 2 or 3, wherein said at least one additive is present in an amount comprised from 1% to 20% by weight relative to the amount of ceramic raw materials used, preferably in an amount comprised from 10 to 15%.

5. The process according to any one of the preceding claims, wherein the granulating step b) occurs by atomization so as to obtain agglomerates having a size comprised from 0.02 mm to 2 mm, preferably comprised from 0.04 to 0.15 mm.

6. The process according to any one of the preceding claims, wherein the granulating step b) occurs in the presence of at least one aggregating agent selected from the group consisting of: cellulose derivatives and alkaline silicates.

7. The process according to any one of the preceding claims, wherein the calcinating step c) occurs at a temperature higher than 600° C, and even more preferably higher than 1000° C.

8. A granular material for digital control decoration, obtained with the process according to claims 1-7.

9. The granular material according to claim 8, wherein the free volume between the particles is at least 10%.

10. The granular material according to claim 9, wherein the free volume between the particles is at least 30% and preferably comprised from 30 to 50% of the total volume.

11. A use of the granular material according to claims 8-10 as a decorative material, preferably by means of a digital control decoration technology with water-based inkjet decorating machines.

## Patentansprüche

1. Verfahren zur Herstellung eines Granulatmaterials für die digital gesteuerte Dekoration, umfassend folgende Schritte:
a) Mahlen eines festen Gemisches, umfassend keramisches Rohmaterial, vorzugsweise in Wasser;
b) Granulieren des gemahlenen Gemisches aus Schritt a) in Form von Agglomeraten, aufweisend Größen von 0,02 mm bis 2 mm, und
c) Kalzinieren der Agglomerate bei einer Temperatur von mindestens 500 °C.

2. Verfahren nach Anspruch 1, wobei das feste Gemisch auch mindestens einen Zusatzstoff aufweist, ausgewählt aus der Gruppe, bestehend aus: Getreidespelzen, vorzugsweise Reisspelzen, Stärken, Kohle, Alkali- oder Erdalkali-Sulfaten oder -Karbonaten, Getreidemehlen, Bindemitteln, Netzmitteln, Suspensionsmitteln, Verdünnungsmitteln, Entflockungsmitteln und deren Mischungen.

3. Verfahren nach Anspruch 2, wobei die Entflockungsmittel ausgewählt sind aus der Gruppe, bestehend aus Polyphosphatsalz und einem Alkali- oder Erdalkali-Silikat, vorzugsweise Pentanatriumtriphosphat und Natriumsilikat.

4. Verfahren nach Anspruch 2 oder 3, wobei der mindestens eine Zusatzstoff in einer Menge von 1 % bis 20 % Gewichtsanteil relativ zur Menge an verwendetem keramischem Rohmaterial enthalten ist, vorzugsweise in einer Menge von 10 bis 15 %.

5. Verfahren nach einem der vorhergehenden Ansprüche, wobei der Schritt b) zum Granulieren durch Zerstäubung stattfindet, sodass Agglomerate erhalten werden, die eine Größe von 0,02 mm bis 2 mm aufweisen, vorzugsweise von 0,04 bis 0,15 mm.

6. Verfahren nach einem der vorhergehenden Ansprüche, wobei der Schritt b) zum Granulieren mit mindestens einem aggregierenden Stoff stattfindet, ausgewählt aus der Gruppe, bestehend aus: Zellstoffderivaten und Alkalisilikaten.

7. Verfahren nach einem der vorhergehenden Ansprüche, wobei der Schritt c) zum Kalzinieren bei einer Temperatur höher als 600 °C und noch weiter vorzugsweise höher als 1000 °C stattfindet.

8. Granulatmaterial für die digital gesteuerte Dekoration, erhalten mit dem Verfahren nach den Ansprüchen 1 bis 7.

9. Granulatmaterial nach Anspruch 8, wobei das freie Volumen unter den Partikeln mindestens 10% beträgt.

10. Granulatmaterial nach Anspruch 9, wobei das freie Volumen unter den Partikeln mindestens 30% beträgt und vorzugsweise zwischen 30 und 50% des Gesamtvolumens liegt.

11. Verwendung des Granulatmaterials nach den Ansprüchen 8 bis 10 als Dekormaterial, vorzugsweise mittels einer Technologie zur digital gesteuerten Dekoration mit wasserbasierten Tintenstrahldekormaschinen.

## Revendications

1. Procédé de préparation d'un matériau granuleux pour décoration à commande numérique, comprenant les étapes suivantes :
a) broyer une composition compacte comprenant des matériaux bruts en céramique, de préférence en présence d'eau ;
b) granuler la composition moulue de l'étape a) sous forme d'agglomérats ayant des dimensions comprises entre 0,02 mm et 2 mm ; et
c) calciner lesdits agglomérats à une température d'au moins 500 °C.

2. Procédé selon la revendication 1, dans lequel ladite composition compacte comprend également au moins un additif sélectionné à partir des éléments du groupe suivant : des enveloppes de céréales, de préférence des enveloppes de riz, amidons, charbon, sulfates ou carbonates alcalins ou alcalino-terreux, farines de céréale, liants, surfactants, agents suspenseurs, agents solvants et défloculants, et leurs mélanges.

3. Procédé selon la revendication 2, dans lequel lesdits défloculants sont sélectionnés à partir des éléments du groupe suivant : un sel polyphosphate et un silicate alcalin ou alcalino-terreux, de préférence du tripolyphosphate de sodium et du silicate de sodium.

4. Procédé selon la revendication 2 ou 3, dans lequel ledit au moins un additif est présent dans une quantité comprise entre 1 et 20 % en poids par rapport à la quantité de matériaux bruts en céramique utilisée, de préférence dans une quantité comprise entre 10 et 15 %.

5. Procédé selon l'une quelconque des revendications précédentes, dans lequel l'étape de granulation b) se déroule par atomisation de manière à obtenir des agglomérats ayant une dimension comprise entre 0,02 mm à 2 mm, de préférence entre 0,04 et 0,15 mm.

6. Procédé selon l'une quelconque des revendications précédentes, dans lequel l'étape de granulation b) se déroule en présence d'au moins un des agrégants sélectionnés à partir des éléments du groupe suivant : dérivés de cellulose et silicates alcalins.

7. Procédé selon l'une quelconque des revendications précédentes, dans lequel l'étape de calcination c) se déroule à une température supérieure à 600°C ou, de façon encore plus préférentielle, à une température supérieure à 1000°C.

8. Matériau granuleux pour décoration à commande numérique, obtenu d'après le procédé selon les revendications de 1 à 7.

9. Matériau granuleux selon la revendication 8, dans lequel le volume libre entre les particules est d'au moins 10 %.

10. Matériau granuleux selon la revendication 9, dans lequel le volume libre entre les particules est d'au moins 30 % et de préférence compris entre 30 et 50 % du volume total.

11. Utilisation d'un matériau granuleux selon les revendications de 8 à 10 comme matériau de décoration, de préférence au moyen d'une technologie de décoration à commande numérique employant des machines de décoration à jets d'encre aqueuse.
